# EUROPÄISCHE PATENTANMELDUNG

(11) **EP 0 913 657 A1**
(43) Veröffentlichungstag der Anmeldung: **06.05.1999**
(21) Anmeldenummer: 98119209.9
(22) Anmeldetag: 12.10.1998
(51) Int. Cl.: F27D 3/00, B65G 47/90

(54) **Dachziegel-Greifvorrichtung**

(30) Priorität: 11.10.1997 DE 19744966
(71) Anmelder: Keller GmbH, 49479 Ibbenbüren-Laggenbeck (DE)
(72) Erfinder: Mansfeld, Michael, Dipl.-Ing., 49477 Ibbenbüren (DE); Mühlenkamp, Adrian, Dipl.-Ing., 49479 Ibbenbüren (DE); Wieligmann, Friedrich, Dipl.-Ing., 49492 Westerkappeln (DE)

(57) **Zusammenfassung**

Die Erfindung betrifft eine Dachziegel-Greifvorrichtung mit Dachziegel-Formlinge und/oder Dachziegel außerhalb des bei der Dacheindeckung sichtbaren Bereichs erfassenden Greifelementen und ist dadurch gekennzeichnet, daß die Dachziegel-Greifvorrichtung zum Erfassen des Kopf- und Fußbereichs ausgebildet ist sowie
a) mindestens eine zangen- oder zwingenartige Greifeinrichtung (4, 4') zur Formlings-Klemmung im Bereich der Kopfverfalzung (7') und
b) mindestens ein Widerlager (6, 6') für die traufseitige Formlingshälfte aufweist.

## Beschreibung

Die Erfindung betrifft eine Dachziegel-Greifvorrichtung gemäß Oberbegriff des Patentanspruchs 1.

Soweit eine derartige Vorrichtung aufgrund firmeneigener Entwicklung, bei der die Dachziegel-Rückseite besonders gestaltet und mittels hakenbildend abgewinkelter Greiffinger hinterfaßt wird, durch die DE 196 09 474 C1 bekannt geworden ist, zeigt sich beim Stand der Technik noch der Nachteil, daß einerseits ein "Sonderziegel" erforderlich wird - daher der Einsatz nicht überall möglich ist - und andererseits ein verhältnismäßig langsamer Bewegungsablauf einzuhalten ist.

Der Erfindung liegt die Aufgabe zugrunde, eine verbesserte Dachziegel-Greifvorrichtung zu schaffen, mit der auch oberflächenbeschichtete Dachziegel-Formlinge ohne nachteilige Abdrücke oder Schäden in der nach einer Dacheindeckung sichtbaren Oberfläche sicher gegriffen sowie schnell transportiert und abgesetzt werden können und die auch eine schnelle Umsetzung aus einer Flachlage in einen Schrägbesatz ermöglicht.

Erfindungsgemäß wird dies durch eine Dachziegel-Greifvorrichtung gemäß Patentanspruch 1 gelöst. Vorteilhafte Weiterbildungen ergeben sich aus den Unteransprüchen.

Patentanspruch 2 definiert eine erste Ausführungsform, bei der die klemmende Einrichtung, d.h. Greifeinrichtung für den Dachziegel-Kopfbereich, mit Greifelementen zur Klemmung einer Kopffalzrippe ausgebildet ist und Patentanspruch 9 definiert eine zweite Ausführungsform, bei der die klemmende Einrichtung als solche zur Dachziegelkanten-Klemmung im Bereich der Kopfverfalzung ausgebildet ist.

Mit der erfindungsgemäßen Dachziegel-Greifvorrichtung lassen sich auch oberflächenbeschichtete Dachziegel-Formlinge derart greifen, daß nach der Dacheindeckung keinerlei Greifermarkierungen in der Ergoben- oder Glasurschicht sichtbar sind, denn die Angriffsstellen des Greifsystems liegen im später nicht sichtbaren Bereich. Aufgrund des sogenannten Hintergriffs, d.h. Abstützung der Rückseite der traufseitigen Formlingshälfte, zusätzlich zur Klemmung im Bereich der Kopfverfalzung ist eine sichere Formlingserfassung, ein schneller Schwenk aus der Flachlage in eine verhältnismäßig steile Schräglage, z.B. bis etwa 85° zwischen der Horizontalen und der Dachziegel-Rückseite, eine schnelle Transportbewegung zwischen einem Zuförderband oder dgl. und einer Brennunterlage- oder Ofenwagen-Beladestelle sowie ein schneller Bewegungsstopp zum Absetzen möglich. Diese sichere und schnelle Dachziegel-Handhabung gestattet die wirtschaftliche Beladung und Entladung eines Dachziegel-Schrägbesatzes.

In bevorzugter und vorteilhafter Weise ist die erfindungsgemäße Dachziegel-Greifvorrichtung mit einem Roboterarm eines Be- und Entladeroboters verbunden, welcher die Aufnahme- und Ablagepositionen genau anfährt.

Die erfindungsgemäße Dachziegel-Greifvorrichtung ist zwar für eine Dachziegel-Produktion im Schrägbesatz konzipiert, läßt sich jedoch auch für Anlagen mit Flachlagenbrand nutzen.

Aus DE 33 40 282 A1 ist eine Greifvorrichtung zum Greifen von "Verarbeitungsgut" bekannt, bei welcher das jeweils zu greifende Objekt auf zwei gegenüberliegenden Seiten mittels hängend angeordneter Elemente einer Klemmeinrichtung erfaßt sowie dabei seitwärts druckbelastet eingeklemmt und zusätzlich infolge L-förmiger, hakenbildender Endausführung an einer Vorrichtungsseite auch untergriffen werden.

Die an einem obenliegenden "Träger 1" angeordneten Klemmelemente werden "Anschlag 3" und "Greifer 2" bezeichnet. Auf der dem Anschlag 3 entgegengesetzten Seite des zu greifenden Objektes, nämlich dem "Verarbeitungsgut 15", ist eine "Führung 12" angeordnet; diese Führung 12 dient gemäß Seite 6, letzten Absatz dazu, daß nach einer örtlichen Umsetzung und nach dem Zurückschwenken des Greifers (d.h. nach Objekt-Freigabe) in seine Ruhestellung das nur noch am Anschlag anliegende Verarbeitungsgut nicht umkippen kann, sondern an der Führung geführt bleibt.

Die DE 33 40 282 A1 zeigt zwar eine Kombination von unterstützendem Untergreifen (Pos.4) sowie Klemmen (Pos. 2 und 3), ist jedoch vom Aufbauprinzip her für die Handhabung von ungebrannten Dachziegeln ungeeignet, sofern man am fertigen Produkt, d.h. gebrannten Dachziegel, Greifelement-Abdrücke nicht wünscht und einwandfreie Sichtflächen fordert. Die erfindungsgemäße Dachziegel-Greifvorrichtung wird durch die DE 33 40 282 A1 weder vorweggenommen, noch nahegelegt.

Auf der Zeichnung sind zwei Ausführungsbeispiele der Erfindung dargestellt und werden im folgenden näher erläutert. Es zeigen:
- Fig. 1: eine Seitenansicht einer Be- und/oder Entladestation für Dachziegel-Schrägbesatz, wobei drei Brenngutunterlagen dargestellt sind, von denen die rechte im unbeladenen Zustand, die mittlere im Beladezustand (mit einer ersten Ausführungsform des erfindungsgemäßen Dachziegel-Greifers) und die linke im beladenen Zustand gezeigt wird,
- Fig. 2 bis 4: den Funktionsablauf des Dachziegel-Greifens (bei flachliegendem Dachziegelformling) mit erfindungsgemäßem Dachziegel-Greifer der ersten Ausführungsform, wobei eine Klemmung einer Dachziegel-Kopffalzrippe und ein Hintergriff der traufseitigen Formlingshälfte erfolgt,
- Firg. 5: eine Frontansicht eines abgeänderten erfindungsgemäßen Dachziegel-Greifers, welcher für eine Klemmung der Dachziegel-Seitenkanten im Bereich der Kopfverfalzung ausgebildet ist, in einer Position zum Dachziegel-Greifen, und
- Fig. 6: eine Seitenansicht des Dachziegel-Greifers gemäß Fig. 5 mit gegriffenem Dachziegel.

Eine erfindungsgemäße Dachziegel-Greifvorrichtung 1, 1' ist vorzugsweise Bestandteil einer Be- und/oder Entladestation für in einer Lage zu brennende Dachziegel 2, welche beim Brennen auf Brennunterlagen 3 aufliegen, die sie formgerecht unterstützen. Die Brennunterlagen 3 sind beim dargestellten Beispiel für einen sogenannten Schrägbesatz angeordnet - sie sind dabei vorzugsweise in einem steilen Winkel von über 45° zwischen der Horizontalen und Ziegelrückseite schräggestellt, können jedoch auch flacher geneigt oder sogar flachliegnd angeordnet sein. Der Schrägbesatz ist u.a. deshalb vorteilhaft, weil trotz guter Brenngas-Umströmung und einlagiger Abstützung eine große Anzahl von Dachziegeln 2 auf einer vorgegebenen Transportfläche untergebracht werden können.

Die Dachziegel-Greifvorrichtung 1, 1' ist derart konzipiert, daß sie die Dachziegel 2 nur in den später (bei der Dacheindeckung) nicht sichtbaren Bereichen erfaßt und dabei trotzdem eine Klemmwirkung ausübt.

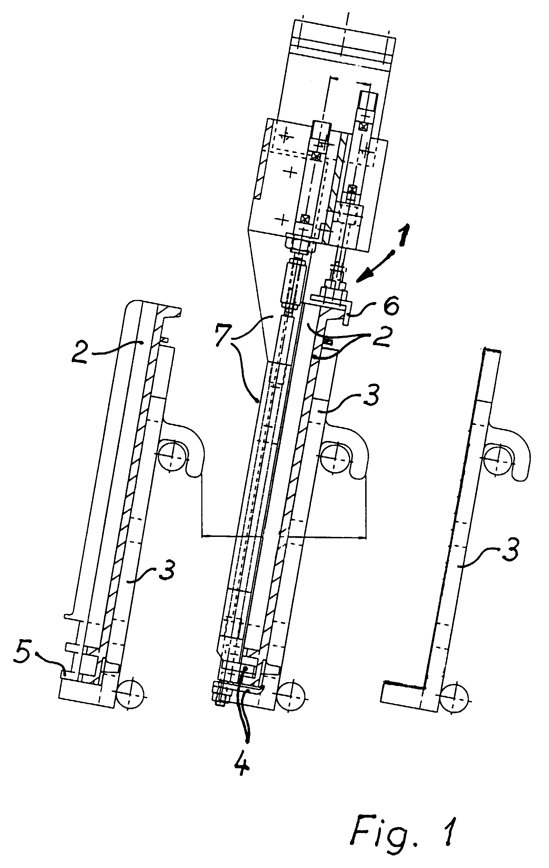

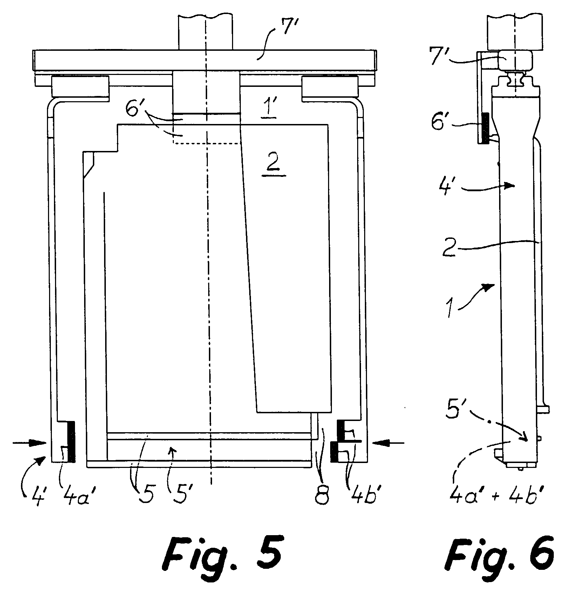

Bei beiden Ausführungsbeispielen ist die Dachziegel-Greifvorrichtung 1, 1' zum Erfassen des Kopf- und Fußbereichs eines Dachziegel(formlings) 2 ausgebildet und weist
a) mindestens eine zangen- oder zwingenartige Greifeinrichtung 4, 4' zur Formlings-Klemmung im Bereich der Kopfverfalzung (gemäß Fig. 1 an einer Kopffalzrippe 5 und gemäß Fig. 5 an den Dachziegel-Seitenkanten im Bereich der durch Kopffalzrippen 5 gebildeten Kopfverfalzung 5' sowie
b) mindestens ein Widerlager 6 für die traufseitige Formlingshälfte auf. Dabei sind die Pos. 4,4' und 6, 6' an einem Grundkörper/Brückenkörper 7, 7' angeordnet, welcher vorzugsweise mit einem Roboterarm (nicht dargestellt) verbunden/verbindbar ist.

Nachfolgend wird das erste Ausführungsbeispiel beschrieben:

Die Greifeinrichtung 4 ist jeweils mit mindestens einer bewegungsstarr dem Grundkörper 7 zugeordneten Greifelement 4a und mindestens einem dazu relativ bewegbaren Greifelement 4b versehen. Das Greifelement 4b hintergreift das kopfseitige Stirnende und ist vorteilhafterweise in der freiendigen Hälfte als Leitorgan ausgebildet. Dieser Bereich ist insbesondere abgewinkelt, kann jedoch auch bogenförmig ausgeführt sein und hat eine justierende Wirkung.

Das oder die Widerlager 6 wirken gemäß Darstellung auf die traufseitige Formlingshälfte vom Dachziegel-Stirnende aus ein, könnte(n) jedoch auch seitlich angeordnet sein. Sie werden in die Funktionsstellung verschoben, könnten jedoch auch verschwenkbar gelagert sein. Wie aus der Zeichnung zu ersehen ist, unterfaßt das oder unterfassen die Widerlager 6 die Rückseite des mit 2 bezifferten zu trocknenden und/oder zu brennenden Dachziegel-Formlings oder gebrannten Dachziegels.

Aufgrund der erfindungsgemäßen Ausbildung mit mindestens einer Kopffalz-Klemmstelle und Hintergriff der traufseitigen Formlingshälfte ist ein sicheres Festhalten eines zwischen Zuführbahn und Brenngutträger oder zwischen Brenngutträger und Abführbahn zu bewegenden Dachziegel-Formlings oder Dachziegels gewährleistet.

Ein besonderer Vorteil besteht darin, daß mit der Erfindung ein Schrägbesatz mit Überlappung der benachbarten Teile einen verhältnismäßig kleinen Spalt benötigt und die Brennunterlagen stabilisierende Querverstrebungen aufweisen können.

Die Dachziegel-Greifvorrichtung 1 eignet sich besonders bei Aufreihung von Dachziegelformlingen mit kleinem Abstand oder Spalt zwischen benachbarten Dachziegeln 2 oder Brennunterlagen 3. Wegen des in Höhenrichtung gegenüber dem zu greifenden Dachziegel-Formling oder Dachziegel 2 verfahrbaren Greifelements 4b ist jedoch ein entsprechender Freiraum oder Bewegungsspalt unterhalb der Dachziegel-Stützebene erforderlich. Außerdem ist wegen des bevorzugten Umgreifens der untenliegenden Dachziegel-Kopfkante durch das Greifelement 4b eine entsprechende Aussparung in der Brennunterlage 3 erforderlich.

Wo solche Freiräume nicht zur Verfügung stehen, wird die Dachziegel-Greifvorrichtung 1' eingesetzt, die nachfolgend kurz beschrieben wird:

Bei der Dachziegel-Greifvorrichtung 1' wird jeder Dachziegel-Formling oder Dachziegel 2 ebenfalls nur an den nach der Dach-Eindeckung unsichtbaren Stellen ergriffen, nämlich einerseits an den Seitenkanten im Bereich der Kopfverfalzung 7' in Klemmhalterung gefaßt und andererseits an der Dachziegel-Rückseite im Bereich der traufseitigen Formlingshälfte hintergriffen und abgestützt.

Wie aus Fig. 5 zu ersehen ist, ist die Greifeinrichtung 4' für die Dachziegel-Seitenkanten als Parallelgreifer ausgebildet und die Greifelemente 4a', 4b' springen gegenüber den Haltearmen dachziegelseitig vor. Die Klemmfläche mindestens einer Greifer-Hälfte kann dabei entsprechend der Ausbildung eines Dachziegeleck-Ausschnitts 8 abgestuft ausgebildet oder in Stufenform einstellbar sein.

In bevorzugter Weise sind an einem quer zur Dachziegel-Längsache verlaufenden Grundkörper 7' die Greifelement-Haltearme verschiebbar gelagert und mindestens ein Widerlager 6' für die traufseitige Formlingshälfte ortsfest angeordnet.

Auch beim zweiten Ausführungsbeispiel ist der Grundkörper 7' mit einem Roboterarm verbunden. Dieser kann Bestandteil einer Be- und/oder Entladestation für Dachziegel-Schrägbesatz, d.h. für aus der Vertikalen geneigtem Dachziegel-Besatz, sein.

### Bezugszeichenliste

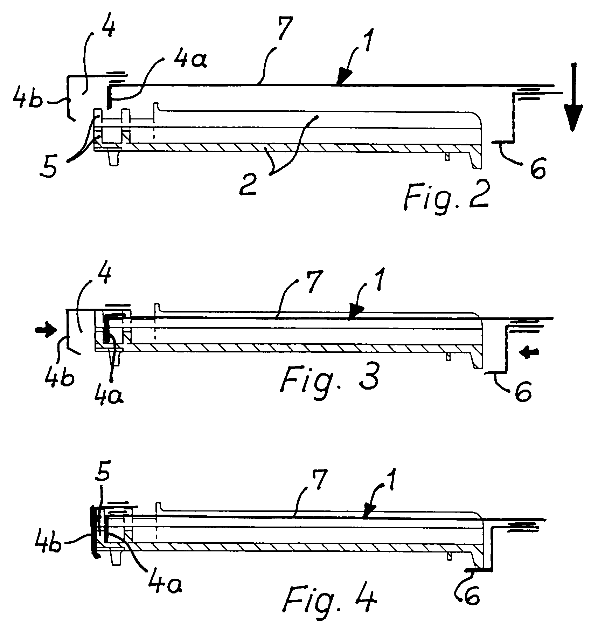

- 1: Dachziegel-Greifvorrichtung (Fig. 1 - 4)
- 1': Dachziegel-Greifvorrichtung (Fig. 5 + 6)
- 2: Dachziegel
- 3: Brennunterlagen für 2
- 4, 4': Greifeinrichtung
- 4a: Greifelement
- 4a': Greifelement
- 4b: Greifelement
- 4b': Greifelement
- 5: Kopffalzrippe
- 5': Kopfverfalzung
- 6: Widerlager
- 6': Widerlager
- 7: Grundkörper/Brückenkörper
- 7': Grundkörper/Brückenkörper
- 8: Dachziegeleck-Ausschnitt (vgl. Fig. 5)

## Patentansprüche

1. Dachziegel-Greifvorrichtung mit Dachziegel-Formlinge und/oder Dachziegel außerhalb des bei der Dacheindeckung sichtbaren Bereichs erfassenden Greifelementen,
dadurch gekennzeichnet, daß dieselbe zum Erfassen des Kopf- und Fußbereichs ausgebildet ist sowie
a) mindestens eine zangen- oder zwingenartige Greifeinrichtung (4, 4') zur Formlings-Klemmung im Bereich der Kopfverfalzung und
b) mindestens ein Widerlager (6, 6') für die traufseitige Formlingshälfte aufweist.

2. Dachziegel-Greifvorrichtung nach Anspruch 1, dadurch gekennzeichnet,
daß die mit dem Dachziegel-Kopfbereich zusammenwirkende Greifeinrichtung (4) mit Greifelemten (4a, 4b) zum Einklemmen einer Kopffalzrippe (5) ausgebildet ist.

3. Dachziegel-Greifvorrichtung nach Anspruch 1 oder 2, dadurch gekennzeichnet,
daß an einem nahezu die gesamte Dachziegellänge überfassenden, in Dachziegel-Längsrichtung relativ zum Dachziegel(formling) verschiebbaren Grundkörper (Brückenkörper) (7) das eine Greifelement (4a) der zangen- oder zwingenartigen Greifeinrichtung (4) bewegungsstarr und das zweite Greifelement (4b) verschieblich angeordnet sowie das oder die Traufhälften-Widerlager in Funktionstellung verschwenkbar oder verschiebbar gelagert sind.

4. Dachziegel-Greifvorrichtung nach einem der Ansprüche 1 bis 3,
dadurch gekennzeichnet, daß die in Dachziegel-Längsrichtung äußeren Greiforgane, nämlich Geifzangenelement einerseits und Widerlagerelement andererseits, abgewinkelt ausgebildet sind.

5. Dachziegel-Greifvorrichtung nach Anspruch 4, dadurch gekennzeichnet,
daß das Greifelement (4b), welches die äußerste Kopffalzrippe (5) umgreift, als Leitorgan ausgebildet ist.

6. Dachziegel-Greifvorrichtung nach einem der Ansprüche 1 bis 5,
dadurch gekennzeichnet, daß der die Dachziegellänge überfassende brückenbildende Grundkörper (7) zwei beabstandet nebeneinander vorgesehene Klemmstellen für die Dachziegel-Kopfverfalzung aufweist.

7. Dachziegel-Greifvorrichtung nach einem der Ansprüche 1 bis 6,
dadurch gekennzeichnet, daß der Grundkörper (7) zwei beabstandet nebeneinander vorgesehene Widerlager (6) für den Dachziegel-Hintergriff aufweist.

8. Dachziegel-Greifvorrichtung nach einem der Ansprüche 1 bis 7,
dadurch gekennzeichnet, daß der Grundkörper (7) quer (rechtwinklig) zur Dachziegeloberfläche verstellbar gehalten ist.

9. Dachziegel-Greifvorrichtung nach Anspruch 1,
dadurch gekennzeichnet, daß die mit dem Dachziegel-Kopfbereich zusammenwirkende Greifeinrichtung (4') mit Greifelementen (4a', 4b') zur Dachziegelkanten-Klemmung im Bereich der Kopfverfalzung (5') ausgebildet ist.

10. Dachziegel-Greifvorrichtung nach Anspruch 9,
dadurch gekennzeichnet, daß die Greifelemente (4a', 4b') an quer zur Dachziegel-Längsachse verschiebbar angeordneten Haltearmen vorgesehen sind.

11. Dachziegel-Greifvorrichtung nach Anspruche 9, oder 10,
dadurch gekennzeichnet, daß die Greifeinrichtung (4') für die Dachziegel-Seitenkanten als Parallelgreifer ausgebildet ist und die Greifelemente (4a', 4b') gegenüber den Haltearmen dachziegelseitig vorspringen, wobei die Klemmfläche mindestens einer Greifer-Hälfte entsprechend der Ausbildung eines Dachziegeleck-Ausschnitts (8) abgestuft ausgebildet oder in Stufenform einstellbar ist.

12. Dachziegel-Greifvorrichtung nach einem der Ansprüche 9 bis 11,
dadurch gekennzeichnet, daß an einem quer zur Dachziegel-Längsachse verlaufenden Grundkörper (7') die Greifelement-Haltearme verschiebbar gelagert und mindestens ein Widerlager (6') für die traufseitige Formlingshälfte ortsfest angeordnet sind.

13. Dachziegel-Greifvorrichtung nach einem der Ansprüche 1 bis 12,
dadurch gekennzeichnet, daß der Grundkörper (7, 7') mit einem Roboterarm verbunden ist.

14. Dachziegel-Greifvorrichtung nach einem der Ansprüche 1 bis 13,
dadurch gekennzeichnet, daß dieselbe Bestandteil einer Be- und/oder Entladestation für Dachziegel-Schrägbesatz, d.h. für aus der Vertikalen geneigtem Dachziegel-Besatz, ist.
